# FASCICULE DE BREVET EUROPEEN

(11) **EP 3 518 181 B1**
(45) Date de publication et mention de la délivrance du brevet: **25.06.2025**
(21) Numéro de dépôt: 19153634.1
(22) Date de dépôt: 24.01.2019
(51) Int. Cl.: G06T 7/20

(54) **PROCÉDÉ DE SUIVI DES DÉPÔTS, DES RETRAITS ET DES DÉPLACEMENTS DANS UNE ENCEINTE À ACCÈS SÉCURISÉ**
NACHVERFOLGUNGSVERFAHREN DER EINLAGERUNGEN, ENTNAHMEN UND BEWEGUNGEN IN EINEM BEHÄLTER MIT GESICHERTEM ZUGANG
METHOD FOR MONITORING DEPOSITS, REMOVALS AND MOVEMENTS IN AN ENCLOSURE WITH SECURE ACCESS

(30) Priorité: 25.01.2018 FR 1850600
(43) Date de publication de la demande: 31.07.2019
(73) Titulaire: Fichet Bauche, 51110 Bazancourt (FR)
(72) Inventeur: JOIGNAUX, Fabien, 08270 FAISSAULT (FR)
(74) Mandataire: Weinstein Services & Conseils

(56) Documents cités:
- EP-A1- 2 858 536
- US-A- 5 969 755
- US-A- 6 049 363
- US-A1- 2002 141 637
- US-A1- 2008 119 958

## Description

L'invention s'inscrit dans le domaine des enceintes sécurisées contre le vol, comprises dans des meubles tels que les coffres-forts et les armoires fortes, ou des pièces ou logements d'immeuble, comme les chambres fortes ou les compartiments bancaires. S'agissant des meubles, l'invention s'applique aux différents modèles, y compris leurs versions ignifuges. L'invention s'inscrit aussi dans l'équipement de telles pièces d'immeuble sécurisées ou encore d'ameublements sécurisés préexistants, et dans les procédés de sécurisation et d'utilisation associés.

Les enceintes sécurisées sont équipées d'une porte et de capteurs et servomoteurs pour la fermeture de la porte, son verrouillage et son déverrouillage. Des serrures à clés sécurisées sont connues pour permettre le verrouillage ou le déverrouillage. Des contrôles d'accès par codes sont également connus, ainsi que, dans certaines circonstances, l'utilisation de données biométriques spécifiques à un utilisateur enregistré dans un système de contrôle.

L'enceinte sécurisée est entourée d'une paroi forte, empêchant tout accès, ainsi que, secondairement, toute visualisation du contenu depuis l'extérieur.

EP2858536B1 présente un système de contrôle des inventaires basé sur l'imagerie pour surveiller le retrait et le remplacement des outils utilisés dans un environnement de fabrication ou de service.

Plusieurs personnes peuvent être munies des moyens de déverrouillage, typiquement parce que, par exemple, un code a été transmis à plusieurs utilisateurs autorisés.

Pour suivre le contenu d'une telle enceinte sécurisée, il est possible de mettre en place, à l'extérieur de l'enceinte, un cahier de suivi, ou un répertoire électronique, sur lequel chaque accès est répertorié. Mais cette manière de faire est peu fiable, et complique la tâche des personnes impliquées.

Pour résoudre ce problème, il est proposé un procédé de suivi des dépôts et des retraits dans une enceinte à accès sécurisé, le procédé comprenant une étape de déverrouillage de l'accès à un espace interne de l'enceinte pour permettre une introduction d'un objet dans ledit espace, un retrait d'un objet dudit espace, ou encore un déplacement d'un objet dans ledit espace, suivie d'une étape de nouveau verrouillage d'accès dudit espace après l'éventuelle introduction, l'éventuel retrait ou l'éventuel déplacement.

Le procédé est remarquable car il comprend de plus une étape préalable de mémorisation d'une première image numérique à l'aide d'un capteur dirigé vers ledit espace interne avant l'étape de déverrouillage, une étape de mémorisation d'une deuxième image numérique à l'aide du capteur dirigé vers ledit espace interne à l'accès nouvellement sécurisé, et une étape finale de mise à la disposition d'au moins une information, obtenue au cours d'une analyse, relative à la différence entre des objets visibles sur la première et la deuxième images sur une interface extérieure à l'enceinte.

Selon des caractéristiques avantageuses et optionnelles :
- le procédé peut comprendre une étape d'analyse de la première et de la deuxième images pour identifier les objets déposés dans l'enceinte, retirés de l'enceinte ou déplacés dans l'enceinte entre les étapes de déverrouillage et de nouveau verrouillage,
- ladite information relative à la différence peut comprendre une mise en évidence, sur la première ou la deuxième image, respectivement des objets retirés de ou déposés dans l'enceinte, ou encore déplacés dans l'enceinte entre les étapes de déverrouillage et de nouveau verrouillage ;
- le procédé peut comprendre une identification d'objets sur la première et la deuxième image au moins à l'aide d'une image de référence de l'enceinte vide prise au cours d'une étape de mise en service ou de réinitialisation ;
- le procédé peut comprendre un affichage, sur un écran de l'interface, de ladite information relative à la différence ;
- le procédé peut être mis en œuvre pour une enceinte qui est celle d'un ameublement sécurisé, comme un coffre-fort ou une armoire forte, éventuellement ignifuge ;
- le procédé peut être mis en œuvre pour une enceinte qui est celle d'un compartiment bancaire ou d'une chambre forte ;

L'invention porte aussi sur un système d'ameublement comprenant une enceinte à accès sécurisé et des moyens de verrouillage à un espace interne de l'enceinte pour permettre une introduction d'un objet dans ledit espace, un retrait d'un objet dudit espace, ou un déplacement d'un objet dans ledit espace, ainsi que des moyens de nouveau verrouillage d'accès dudit espace.

Le système d'ameublement est remarquable car il comprend de plus des moyens de mémorisation d'une première image numérique initiale à l'aide d'un capteur compris dans le meuble et dirigé vers ledit espace interne avant la mise en œuvre des moyens d'autorisation, et de moyens de mémorisation d'une deuxième image numérique à l'aide du capteur après que l'accès a été nouvellement sécurisé, et des moyens de détermination et de mise à la disposition sur une interface extérieure à l'enceinte d'au moins une information relative à la différence entre les objets visibles sur la première et la deuxième images pour un suivi des dépôts, des retraits ou des déplacements d'objets.

Les moyens de détermination et de mise à disposition peuvent comprendre une unité de mémorisation des accès successifs à l'espace sécurisé comprise dans le meuble, et un écran intégré sur ou dans une paroi ou une porte du meuble sur lequel peuvent être passés en revue les informations relatives à la différence associées aux accès successifs et la date et l'horaire d'accès correspondants.

Le meuble peut être un coffre-fort ou une armoire forte, éventuellement ignifuge.

L'invention est définie par les revendications annexées. L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- La figure 1 présente un mode de réalisation d'un dispositif selon l'invention ;
- la figure 2 présente une vue du dispositif, présentant des aspects intérieurs ;
- la figure 3 présente un procédé selon l'invention ;
- les figures 4 et 5 présentent des aspects de mise en œuvre de l'invention avec le dispositif des figures 1 et 2
- les figures 6 et 7 présentent deux autres contextes d'utilisation de l'invention.

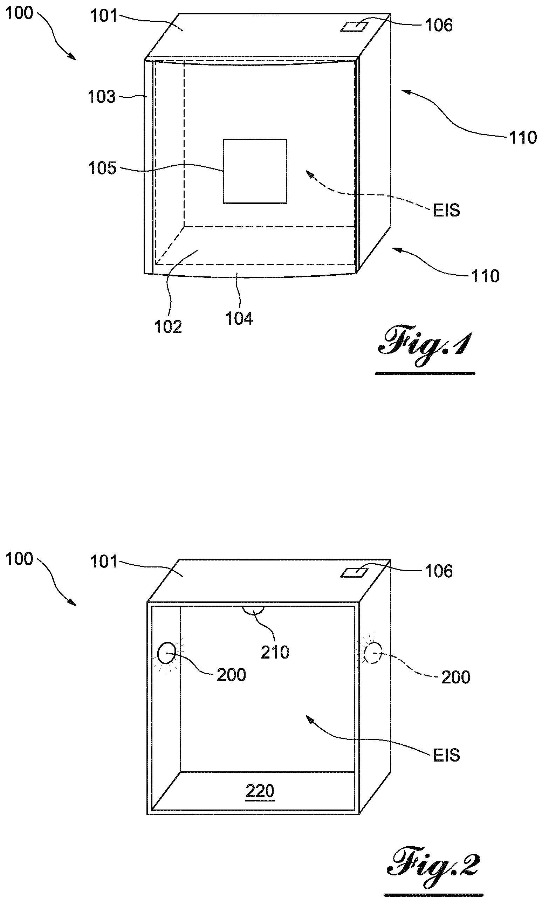

En figure 1, on a représenté un coffre-fort 100 selon un mode de réalisation de l'invention. Le coffre-fort 100 est un objet lourd mais transportable, constituant une enceinte à accès sécurisé et comprenant autour d'un espace intérieur sécurisé EIS (ou espace interne), des parois fortes 101 et une porte d'accès sécurisée 102 articulée sur les parois fortes 101 par une charnière 103. L'ouverture et la fermeture de la porte d'accès sécurisée 102 est contrôlé par un ensemble de capteurs et servomoteurs 104 présent dans la porte et sur sa périphérie, dans la charnière 103 ou à la limite des parois fortes 101.

Le coffre-fort 100 comporte une interface externe, notamment pour sa commande et son déverrouillage par un opérateur ou utilisateur humain. Il s'agit ici d'un écran tactile 105 disposé sur la face externe de la porte d'accès sécurisé 102. L'écran tactile 105 interagit avec une carte électronique 106 intégrée au coffre-fort 100 et protégée contre toute intervention extérieure par les parois fortes 101. La carte électronique 106 peut comporter une batterie d'alimentation électrique de longue autonomie pour le fonctionnement des différents équipements électroniques et électriques du coffre, ou il est aussi possible, alternativement ou en plus, d'inclure pour le coffre une alimentation électrique externe filaire par le courant du secteur 220 V, ou 110 V (non représentée). La carte électronique 106 comprend une horloge, qui peut être réglée manuellement ou à l'aide d'un automatisme, par l'une des interfaces électroniques du coffre 100, comme par exemple l'écran tactile 105. L'horloge permet d'identifier à tout instant la date et l'horaire.

Des éléments de fixation 110 permettent de fixer le coffre-fort 100 à un mur ou à un sol.

L'ouverture du coffre-fort 100 se fait par composition d'un code sur l'écran tactile, ou par d'autres méthodes, comme des méthodes biométriques (reconnaissance d'empreinte digitale ou autre). L'utilisation d'un moyen mécanique comme une clé est aussi possible. Tous ces moyens peuvent être combinés. Le contrôle est électronique. Le déverrouillage est commandé par un contrôleur de la carte électronique 106, qui reçoit les informations numériques introduites par l'utilisateur aux fins de déverrouiller le coffre, par l'écran tactile et les éventuelles autres interfaces, et les compare avec des éléments mémorisés pour autoriser l'ouverture ou la refuser.

Quand le coffre-fort est déverrouillé, la porte 102 pivote sur sa charnière 103, laissant l'accès libre à l'espace intérieur sécurisé EIS pour l'utilisateur présent devant le coffre.

En figure 2, on a représenté l'intérieur du coffre-fort 100, en faisant abstraction, pour la représentation, de la porte 102. L'espace intérieur sécurisé EIS est ici constitué d'un unique volume, limité par une surface inférieure 220 sur laquelle des objets, notamment des objets de valeur, peuvent être placés. Dans des variantes, une ou plusieurs tablettes peuvent être présentes.

Des sources de lumière 200 sont présentes sur l'intérieur des parois fortes 101 (ou sur l'intérieur de la porte 102, dans certaines variantes), et permettent d'éclairer l'espace intérieur sécurisé EIS alors que la porte 102 est fermée. De plus, un capteur d'images numériques 210 est monté sur l'une des parois de l'espace intérieur sécurisé EIS (à nouveau, l'intérieur des parois fortes 101 ou la porte 102) et est dirigé vers le volume de l'espace EIS, notamment la surface inférieure 220. Le capteur 210 peut être monté sur la carte électronique 106 ou être monté sur une autre carte. Un contrôleur s'assure que la lumière des sources 200 éclaire l'espace EIS au moment où le capteur 210 effectue ses prises de vue. Alternativement, le capteur peut être un capteur fonctionnant sans lumière visible, par exemple un capteur à infra-rouge ou un capteur à ultra-sons.

Le capteur 210 est de préférence un capteur fixe, qui prend toutes ses photos sous le même angle de vue avec les mêmes réglages.

Plusieurs capteurs 210 peuvent être présents pour obtenir des images complémentaires de l'espace EIS, notamment dans les variantes où le coffre 100 comprend une ou plusieurs tablettes.

Un microprocesseur de la carte électronique 106 enregistre les images numériques capturées par le capteur 210, ainsi que la date et l'horaire à laquelle elles ont été prises.

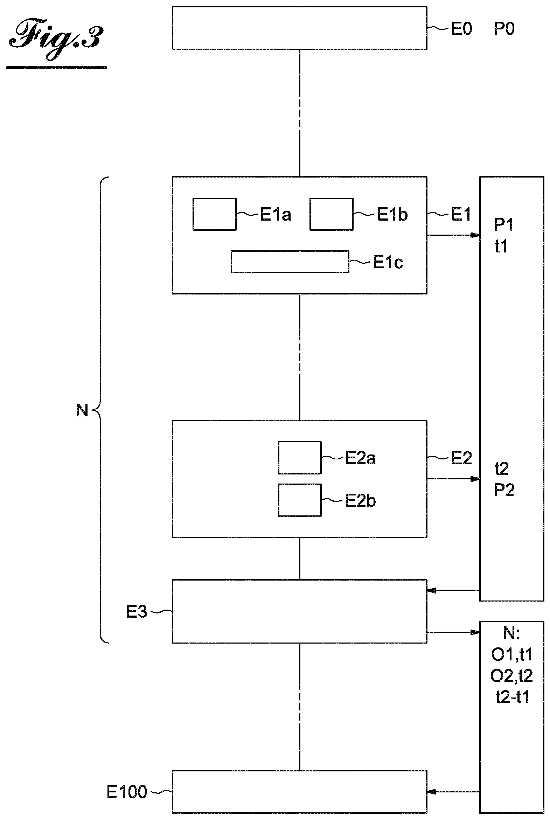

En figure 3, on a représenté la mise en œuvre du système présenté au figures 1 et 2.

Il est tout d'abord procédé à une étape de mise en service ou d'initialisation E0, au cours de laquelle le capteur 210 capture une image P0 de l'espace intérieur sécurisé EIS. Par principe, on considère que cet espace EIS est à ce moment vide, et l'utilisateur a été invité, par des consignes, à s'assurer que c'est effectivement le cas. L'image P0 servira, au cours de l'utilisation en fonction du coffre 100, de photographie de référence permettant une analyse de qualité des images prises ultérieurement.

Le coffre 100 est ensuite mis en fonction. Son ou ses utilisateurs l'ouvrent plusieurs fois et le referment à chaque fois après avoir introduit ou repris des objets de valeur, de tailles et aspects divers, qui peuvent être posés les uns à côté des autres sur la surface inférieure 220. Les objets peuvent aussi être déplacés, c'est-à-dire que soit a) ils restent dans le coffre entre l'ouverture et la fermeture, mais changent finalement de localisation sur la surface inférieure 220, soit b) l'utilisateur les sort du coffre et les y remet à une place différente avant de refermer le coffre.

Un cycle d'ouverture / fermeture référencé N est détaillé sur la figure.

Il commence par une étape E1 de préparation. Cette étape E1 comprend une étape E1a de décision d'ouverture, par le contrôleur de la carte électronique 106. L'étape E1 comprend aussi une étape E1b de capture d'une image numérique P1 à l'aide du capteur 210, avec mémorisation de l'image P1 et de la date et de l'horaire associés t1, dans une mémoire de la carte électronique 106. Lors de cette étape E1, l'image est capturée par le capteur numérique 210 qui est positionné de la même manière qu'il l'était lors de l'étape E0 d'initialisation.

L'étape E1 de préparation se termine par une étape E1c de déverrouillage de la porte 102, ou déverrouillage de l'accès à l'espace interne.

On précise que dans le mode de réalisation présenté, la réalisation de l'étape E1a de décision d'ouverture précède et déclenche successivement l'étape E1b de capture et l'étape E1c de déverrouillage, celle-ci n'étant réalisé qu'après l'étape E1b de capture. Cela permet de s'assurer que l'image capturée l'est juste avant l'ouverture, ce qui offre une sécurité optimale dans le suivi du contenu du coffre. Néanmoins, il est aussi possible de réaliser l'étape E1b avant l'étape E1a, par exemple en prévoyant des captures d'images à intervalles de temps réguliers entre deux ouvertures du coffre, l'image P1 étant alors la dernière image capturée avant la décision d'ouverture, et la date et l'horaire t1 lui étant associés conformément à l'instant à laquelle cette image avait été capturée.

Après l'étape E1c de déverrouillage, l'accès à l'espace intérieur sécurisé EIS est libre pour l'opérateur ou l'utilisateur. Il peut prendre un objet qui était présent dans le coffre 100, voire plusieurs objets, et il peut en déposer (ou introduire) un ou, encore, plusieurs. Il peut aussi déplacer les objets sans en supprimer ou en ajouter. Il peut aussi laisser les objets tels quels, sans en supprimer ou en ajouter, et sans les déplacer.

Il est ensuite procédé à une étape de fermeture E2. Celle-ci comprend une étape de verrouillage E2a, au cours de laquelle la porte 102 est fermée en sorte que l'accès à l'espace intérieur sécurisé EIS est rendu impossible à l'utilisateur ou opérateur. Puis une étape E2b de capture d'une image numérique P2 est menée, à l'aide du capteur numérique 210, positionné de la même manière qu'il l'était lors des étapes E0 et E1b, en sorte de photographier le même angle solide. De manière importante, l'étape E2b n'est autorisée qu'après que l'étape de verrouillage ait été complétée. L'étape E2b comprend la mémorisation de l'image P2 et de la date et de l'horaire associés t2, dans une mémoire de la carte électronique 106.

Ultérieurement, une étape E3 de traitement ou analyse des images associées au cycle d'ouverture / fermeture N est menée.

L'étape E3 comprend, suivant les variantes, la comparaison des images P0, P1 et P2, ou simplement la comparaison des images P1 et P2.

Au cours de cette étape, un processeur identifie les objets visibles sur l'image P1 et en établit une liste, identifie les objets visibles sur l'image P2 et en établit une liste. Le processeur peut être celui de la carte électronique 106, équipé d'un *firmware* (logiciel embarqué) adapté, ou peut être un processeur d'un serveur distant, auquel les données (images P1 et P2, ainsi que dates correspondantes) ont été transmises. Un algorithme permet de distinguer les objets superposés, sous réserve qu'un objet large ne dissimule pas complètement un petit objet. A partir de ces deux listes, le processeur identifie les objets qui ont été retirés du coffre 100 au cours du cycle d'ouverture / fermeture, ainsi que ceux qui ont été introduits et laissés dans le coffre au cours de ce même cycle, et ceux qui ont simplement été déplacés. Dans l'exemple représenté sur la figure 3, la liste des objets présents avant l'ouverture, à la date t1, est : O1 (un seul objet), et la liste des objets présents après la fermeture, à la date t2, est : O2 (un seul objet, mais différent du précédent). Aucun objet n'a dans ce scénario été déplacé. Il en résulte que la liste des objets retirés est réduite à O1, et que la liste des objets introduits est réduite à O2, et la liste des objets déplacés est vide. Des listes plus longues peuvent bien sûr être établies, en fonction des scénarios d'utilisation.

Qui plus est, au cours de cette étape, la durée d'ouverture est calculée, en formant la différence entre les deux dates t1 et t2 : la durée est t2 - t1.

Les listes des objets retirés, des objets introduits et des objets déplacés sont enregistrées, avec leurs localisations sur les images correspondantes, ainsi que la durée de l'ouverture.

L'identification des objets sur la première et la deuxième image P1 et P2 est facilitée par l'utilisation de l'image de référence de l'enceinte vide P0 prise au cours de l'étape de mise en service ou de réinitialisation E0.

Ultérieurement, lors d'une étape E100 de consultation de l'historique des cycles d'ouverture / fermeture par un utilisateur ou un administrateur, si l'utilisateur ou administrateur sélectionne le cycle d'ouverture / fermeture N, les informations sauvegardées en association avec la référence N du cycle lui sont transmises, par exemple par affichage sur l'écran 105, un affichage distant sur un *smartphone* (téléphone intelligent), utilisable notamment si le propriétaire du coffre n'est pas à son domicile.

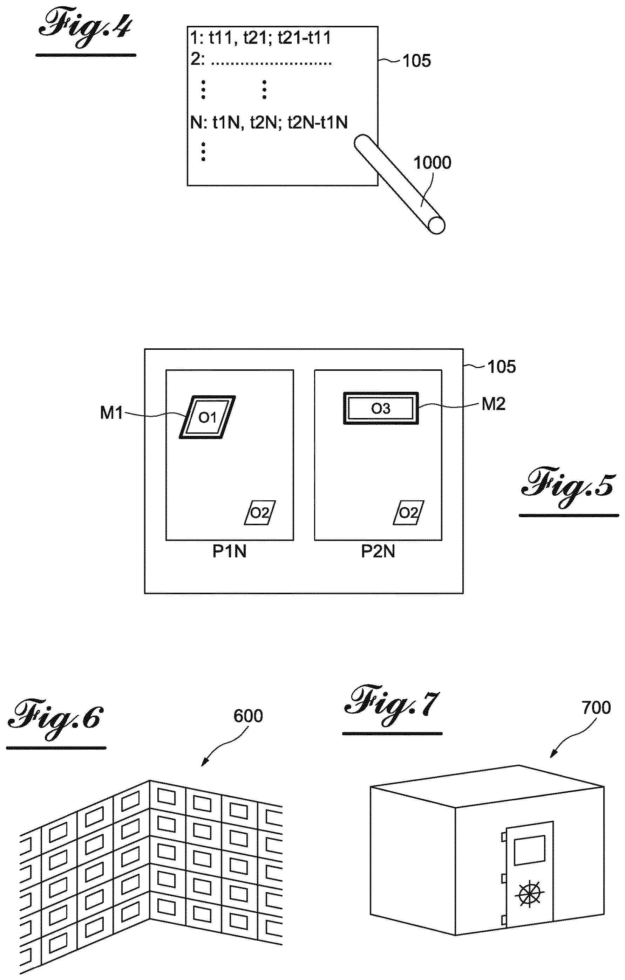

En référence à la figure 4, on a représenté l'écran tactile 105, sur lequel, après navigation dans un menu et choix de la consultation des informations relatives aux cycles d'ouverture / fermeture, l'utilisateur ou l'administrateur se voit proposer de choisir un des cycles d'ouverture / fermeture qui ont été observés par le coffre 100 depuis sa dernière réinitialisation. Ainsi, un menu déroulant propose une succession de cycles, numérotées à partir de 1, et parmi lesquels le cycle N, pour lequel sont affichés la date et l'horaire d'ouverture t1N, ainsi que la date et l'horaire de fermeture t2N et la durée de l'ouverture t2N-t1N. L'utilisateur ou l'administrateur sélectionne la ligne correspondante dans le menu, à l'aide de son doigt ou d'un stylet 1000.

En référence à la figure 5, sous le contrôle du processeur de la carte électronique 106, sont affichées sur l'écran 105 les images P1N et P2N, sur laquelle on voit, dans le scénario représenté, respectivement deux objets repérés O1 et O2 et à nouveau deux objets, repérés O2 et O3, seul un objet, l'objet O2 étant visible sur les deux photos.

Il résulte de l'analyse qui a été faite lors de l'étape E3, que la liste des objets retirés est constituée de O1 et que la liste des objets introduits est constituée de O3. Ces objets sont mis en évidence sur les images correspondantes avec un moyen graphique qui est ici un encadrement de couleur M1 et respectivement M2, et qui dans d'autres variantes peut être une coloration en surimpression, une flèche, ou encore un agrandissement. Une couleur (ou un effet graphique distinctif) peut être utilisée pour les objets retirés, une autre pour les objets introduits, et une troisième pour les objets déplacés.

Les encadrements M1 et M2 constituent chacun une information relative à la différence entre les objets visibles sur les deux images.

L'invention a été décrite dans le cadre d'un coffre-fort. Elle peut être appliquée à une armoire forte, qui comme un coffre-fort est un ameublement sécurisé.

Elle peut aussi être appliquée à des compartiments bancaires 600, tels que représentés en figure 6, ou à une chambre forte 700, comme représentée en figure 7. Ce sont des pièces ou des petits logements d'immeubles, à accès sécurisé. Dans ce cas, l'écran 105, la carte électronique 106, les éclairages 200 et le capteur d'images numériques 210 sont fixés aux parois de la pièce ou du logement à accès sécurisé, ou à sa porte.

L'analyse menée à l'étape E3 peut être effectuée dans le processeur de la carte électronique 106, mais peut aussi être effectué de manière déportée, dans un processeur externe, tel le processeur d'un micro-ordinateur relié à l'enceinte par une connexion filaire ou non filaire, de préférence sécurisée.

L'interface de mise à la disposition de l'utilisateur d'informations de suivi peut être différente d'un écran tel que présenté ci-dessus. Il peut s'agir d'une interface de communication filaire, par exemple par port USB, ou sans fil, à distance, par exemple par GSM, Wifi ou Bluetooth, visant à transmettre les informations sur un terminal externe, tel qu'un téléphone portable ou une tablette, ou un microordinateur, éventuellement par l'intermédiaire d'un réseau téléphonique ou un réseau informatique local ou étendu.

Dans certains modes de réalisation, la photographie est prise puis transmise à un ordinateur distant, le traitement des images étant effectué de manière déportée, par exemple sur un hébergeur distant d'informatique en nuages (Cloud computing). Les données sont conservées à distance. Ainsi, l'historique des accès n'est pas perdu en cas de vol du coffre.

## Revendications

1. Procédé de suivi de dépôts, de retraits ou de déplacements dans une enceinte à accès sécurisé (100, 600, 700) mise en œuvre par ordinateur, un cycle d'ouverture / fermeture de ladite enceinte comprenant une étape de déverrouillage (E1c) de l'accès à un espace interne (EIS) de l'enceinte pour permettre une introduction d'un objet dans ledit espace, un retrait d'un objet dudit espace ou son déplacement dans ledit espace, suivie d'une étape de nouveau verrouillage d'accès (E2a) dudit espace après l'éventuelle introduction ou l'éventuel retrait, **caractérisé en ce que** le procédé comprend pour un cycle une étape préalable de mémorisation d'une première image numérique (P1) à l'aide d'un capteur (210) dirigé vers ledit espace interne (EIS) avant l'étape de déverrouillage (E1c), une étape de mémorisation (E2b) d'une deuxième image numérique (P2) à l'aide du capteur (210) dirigé vers ledit espace interne (EIS) à l'accès nouvellement sécurisé, une étape d'analyse (E3) de la première et de la deuxième images (P1, P2) pour identifier les objets déposés dans l'enceinte, retirés de l'enceinte ou déplacés dans l'enceinte entre les étapes de déverrouillage (E1c) et de nouveau verrouillage (E2a), et une mise à la disposition lors d'une étape (E100) de consultation de l'historique des cycles, d'au moins une information (M1, M2) obtenue au cours de l'analyse et relative à la différence entre des objets visibles (O1, O2, O3) sur la première et la deuxième images (P1, P2) sur une interface (105) extérieure à l'enceinte (100).

2. Procédé de suivi de dépôts, de retraits ou de déplacements selon la revendication 1, **caractérisé en ce qu'**une étape (E1a) de décision d'ouverture par un contrôleur d'une carte électronique (106) intégrée à l'enceinte à accès sécurisé (100, 600, 700) et recevant des informations numériques introduites par un utilisateur aux fin de déverrouiller l'enceinte, précède et déclenche successivement, dans cet ordre, une étape de capture (E1b) de la première image (P1) et l'étape de déverrouillage (E1c).

3. Procédé de suivi de dépôts, de retraits ou de déplacements selon la revendication 1, **caractérisé en ce qu'**une étape de capture (E1b) de la première image est réalisée avant une étape (E1a) de décision d'ouverture par un contrôleur d'une carte électronique (106) intégrée à l'enceinte à accès sécurisé (100, 600, 700) et recevant des informations numériques introduites par un utilisateur aux fin de déverrouiller l'enceinte, par captures d'images à intervalles de temps réguliers entre deux ouvertures de l'enceinte, la première image étant alors la dernière image capturée avant l'étape (E1a) de décision d'ouverture, et une date et un horaire (t1) lui étant associés conformément à l'instant auquel cette première image a été capturée.

4. Procédé de suivi de dépôts, de retraits ou de déplacements selon l'une des revendications 1 à 3, **caractérisé en ce que** ladite information relative à la différence comprend une mise en évidence (M1, M2), sur la première ou la deuxième image, respectivement des objets retirés, déplacés ou déposés (O1, O3) entre les étapes de déverrouillage et de nouveau verrouillage.

5. Procédé de suivi de dépôts, de retraits ou de déplacements selon l'une des revendications 1 à 4, **caractérisé en ce qu'**il comprend une identification (E3) d'objets sur la première et la deuxième image (P1, P2) au moins à l'aide d'une image de référence de l'enceinte vide (P0) prise au cours d'une étape de mise en service ou de réinitialisation (E0).

6. Procédé de suivi de dépôts, de retraits ou de déplacements selon l'une des revendications 1 à 5, **caractérisé en ce qu'**il comprend un affichage (E100), sur un écran (105) de l'interface, de ladite information relative à la différence.

7. Procédé de suivi de dépôts, de retraits ou de déplacements selon l'une des revendications 1 à 6, **caractérisé en ce qu'**il est mis en oeuvre pour une enceinte (100) qui est celle d'un ameublement sécurisé, comme un coffre-fort (100) ou une armoire forte, éventuellement ignifuge.

8. Procédé de suivi de dépôts, de retraits ou de déplacements selon l'une des revendications 1 à 6, **caractérisé en ce qu'**il est mis en œuvre pour une enceinte qui est celle d'un compartiment bancaire (600) ou d'une chambre forte (700).

9. Procédé de suivi de dépôts, de retraits ou de déplacements selon l'une des revendications 1 à 8, **caractérisé en ce que** la capture de la première image et de la deuxième image est réalisé par le capteur (210) qui est fixe et sous le même angle de vue avec les mêmes réglages.

10. Système d'ameublement (100) de traitement de données comprenant un meuble comprenant une enceinte à accès sécurisé et des moyens de déverrouillage de l'accès à un espace interne (EIS) de l'enceinte pour permettre une introduction d'un objet dans ledit espace, un retrait d'un objet dudit espace ou un déplacement dans ledit espace d'un tel objet, ainsi que des moyens de nouveau verrouillage d'accès dudit espace, **caractérisé en ce que** le système comprend des moyens de mémorisation (106) d'une première image numérique à l'aide d'un capteur (210) compris dans le meuble et dirigé vers ledit espace interne avant la mise en oeuvre des moyens de déverrouillage, et des moyens de mémorisation (106) d'une deuxième image numérique à l'aide du capteur (210) après que l'accès a été nouvellement sécurisé, et des moyens (105, 106) de détermination et mise à la disposition sur une interface (105) extérieure à l'enceinte, lors d'une consultation de l'historique de cycles d'ouverture / fermeture, d'au moins une information (M1, M2) obtenue au cours d'une analyse et relative à la différence entre les objets visibles sur la première et la deuxième images pour un suivi des dépôts, des retraits ou des déplacements d'objets.

11. Système d'ameublement selon la revendication 10, **caractérisé en ce que** les moyens de détermination et de mise à disposition (105, 106) comprennent une unité de mémorisation (106) des accès successifs à l'espace sécurisé comprise dans le meuble, et un écran intégré (105) sur une paroi ou une porte du meuble sur lequel peuvent être passés en revue les informations (M1, M2) relatives à la différence associées aux accès successifs et la date et l'horaire d'accès correspondants.

12. Système d'ameublement selon la revendication 10 ou la revendication 11, **caractérisé en ce que** le meuble est un coffre-fort ou une armoire forte, éventuellement ignifuge.

## Patentansprüche

1. Verfahren zur Verfolgung von Einlagerungen, Entnahmen oder Bewegungen in einem Bereich mit gesichertem Zugang (100, 600, 700), das computerimplementiert ist, einen Öffnungs/Schließzyklus des genannten Bereichs, umfassend einen Entriegelungsschritt (E1c) des Zugangs zu einem Innenraum (EIS) des Bereichs, um eine Einlagerung eines Objekts in den Bereich, eine Entnahme eines Objekts aus dem Bereich oder seine Bewegung in dem Bereich zu ermöglichen, gefolgt von einem Schritt erneuten Verriegelungsschritt des Zugangs (E2a) zu dem Bereich nach der eventuellen Einlagerung oder der eventuellen Entnahme, **dadurch gekennzeichnet, dass** das Verfahren für einen Zyklus einen vorherigen Speicherschritt eines ersten digitalen Bilds (P1) mittels eines Sensors (210), der auf den Innenraum (EIS) gerichtet ist, vor dem Entriegelungsschritt (E1c) umfasst, einen Speicherschritt (E2b) eines zweiten digitalen Bilds (P2) mittels des Sensors (210), der auf den internen Raum (EIS) mit dem wieder gesicherten Zugang gerichtet ist, einen Analyseschritt (E3) des ersten und zweiten Bilds (P1, P2), um Objekte zu identifizieren, die zwischen dem Entriegelungsschritt (E1c) und dem erneuten Verriegelungsschritt (E2a) in den Bereich eingelagert, aus dem Bereich entnommen oder in dem Bereich bewegt wurden, und ein Bereitstellen während eines Abfrageschritts (E100) des Zyklusverlaufs von mindestens einer Information (M1, M2), die im Verlauf der Analyse erlangt wurde und sich auf den Unterschied zwischen sichtbaren Objekten (O1, O2, O3) auf dem ersten und dem zweiten Bild (P1, P2) auf einer Schnittstelle (105) außerhalb des Bereichs (100) bezieht.

2. Verfahren zur Verfolgung von Einlagerungen, Entnahmen oder Bewegungen nach Anspruch 1, **dadurch gekennzeichnet, dass** ein Entscheidungsschritt (E1a) über die Öffnung durch eine Steuerung einer elektronischen Karte (106), die in den Bereich mit gesichertem Zugang (100, 600, 700) integriert ist und Empfangen von digitalen Informationen, die von einem Benutzer zum Zweck der Entriegelung des Gehäuses eingegeben werden, vorausgeht und nacheinander in dieser Reihenfolge einen Erfassungsschritt (E1b) des ersten Bilds (P1) und den Entriegelungsschritt (E1c) auslöst.

3. Verfahren zur Verfolgung von Einlagerungen, Entnahmen oder Bewegungen nach Anspruch 1, **dadurch gekennzeichnet, dass** ein Erfassungsschritt (E1b) des ersten Bilds vor einem Entscheidungsschritt (E1a) über die Öffnung durch eine Steuerung einer elektronischen Karte (106), die in den Bereich mit gesichertem Zugang (100, 600, 700) integriert ist und Empfangen von digitalen Informationen, die von einem Benutzer zum Zweck der Entriegelung des Gehäuses eingegeben werden, durch Erfassen von Bildern in regelmäßigen Zeitintervallen zwischen zwei Öffnungen des Bereichs durchgeführt wird, wobei das erste Bild dann das letzte Bild ist, das vor dem Entscheidungsschritt (E1a) über die Öffnung erfasst wird, und damit ein Datum und eine Uhrzeit (t1) entsprechend dem Zeitpunkt assoziiert wird, zu dem dieses erste Bild erfasst worden ist.

4. Verfahren zur Verfolgung von Einlagerungen, Entnahmen oder Bewegungen nach einem der Ansprüche 1 bis 3, **dadurch gekennzeichnet, dass** die Information in Bezug auf den Unterschieds eine Hervorhebung (M1, M2) auf dem ersten oder zweiten Bild jeweils von Objekten umfasst, die zwischen dem Entriegelungsschritt und dem erneuten Verriegelungsschritt, entnommen, bewegt oder eingelagert (O1, O3) worden sind.

5. Verfahren zur Verfolgung von Einlagerungen, Entnahmen oder Bewegungen nach einem der Ansprüche 1 bis 4, **dadurch gekennzeichnet, dass** es eine Identifizierung (E3) von Objekten auf dem ersten und dem zweiten Bild (P1, P2) zumindest mittels eines Referenzbilds des leeren Bereichs (P0) umfasst, das während eines Inbetriebnahme- oder Rücksetzschritts (E0) aufgenommen worden ist.

6. Verfahren zur Verfolgung von Einlagerungen, Entnahmen oder Bewegungen nach einem der Ansprüche 1 bis 5, **dadurch gekennzeichnet, dass** es eine Anzeige (E100) der Information in Bezug auf die Differenz auf einem Bildschirm (105) der Schnittstelle umfasst.

7. Verfahren zur Verfolgung von Einlagerungen, Entnahmen oder Bewegungen nach einem der Ansprüche 1 bis 6, **dadurch gekennzeichnet, dass** es für einen Bereich(100) durchgeführt wird, der der eines gesicherten Möbels ist, wie z. B. eines optional feuerfesten Safes (100) oder eines Tresorschranks.

8. Verfahren zur Verfolgung von Einlagerungen, Entnahmen oder Bewegungen nach einem der Ansprüche 1 bis 6, **dadurch gekennzeichnet, dass** es für einen Bereich implementiert wird, der der eines Bankfachs (600) oder eines Tresors (700) ist.

9. Verfahren zur Verfolgung von Einlagerungen, Entnahmen oder Bewegungen nach einem der Ansprüche 1 bis 8, **dadurch gekennzeichnet, dass** die Erfassung des ersten Bilds und des zweiten Bilds durch den Sensor (210) erfolgt, der feststehend ist und unter demselben Blickwinkel mit denselben Einstellungen.

10. Möbelsystem (100) zur Datenverarbeitung, umfassend ein Möbel, umfassend einen Bereich mit gesichertem Zugang, und Einrichtungen zum Entriegeln des Zugangs zu einem Innenraum (EIS) des Bereichs, um eine Einlagerung eines Objekts in den Bereich, eine Entnahme eines Objekts aus dem Bereich oder seine Bewegung in dem Bereich zu ermöglichen, sowie Einrichtungen zur erneuten Verriegelung des Zugangs zu dem Bereich, **dadurch gekennzeichnet, dass** das System Einrichtungen zum Speichern (106) eines ersten digitalen Bilds mittels eines Sensors (210) umfasst, der in dem Möbelstück enthalten ist und auf den Innenraum gerichtet ist, bevor die Einrichtungen zum Entriegeln in Betrieb genommen werden, und Einrichtungen zum Speichern (106) eines zweiten digitalen Bilds mittels des Sensors (210), nachdem der Zugang erneut gesichert worden ist, und Einrichtungen (105, 106) zum Bestimmen und Bereitstellen auf einer Schnittstelle (105) außerhalb des Bereichs bei einer Abfrage des Verlaufs der Öffnungs-/Schließzyklen mindestens einer Information (M1, M2), die im Verlauf einer Analyse erlangt wird und sich auf den Unterschied zwischen den auf dem ersten und dem zweiten Bild sichtbaren Objekten bezieht, für eine Verfolgung der Einlagerungen, Entnahmen oder Bewegungen von Objekten.

11. Möbelsystem nach Anspruch 10, **dadurch gekennzeichnet, dass** die Einrichtungen zum Bestimmen und Bereitstellen (105, 106) eine Einheit Speichereinheit (106) der aufeinanderfolgenden Zugriffe auf den gesicherten Bereich und einen in eine Wand oder Tür des Möbels integrierten Bildschirm (105) umfassen, auf dem die mit den aufeinanderfolgenden Zugriffen assoziierten Differenzinformationen (M1, M2) und das entsprechende Zugriffsdatum und die entsprechende Zugriffszeit überprüft werden können.

12. Möbelsystem nach Anspruch 10 oder Anspruch 11, **dadurch gekennzeichnet, dass** das Möbel ein optional feuerfester Safe oder Tresorschrank ist.

## Claims

1. A method for monitoring deposits, removals and movements in an enclosure with secure access (100, 600, 700) implemented by computer, an opening/closing cycle of said enclosure comprising a step of unlocking (E1c) access to an internal space (EIS) of the enclosure to allow an introduction of an object into said space, a removal of an object from said space or the movement thereof in said space, followed by a step of re-locking access (E2a) of said space after any introduction or any removal, **characterized in that** the method comprises, for a cycle, a preliminary step of storing a first digital image (P1) with a sensor (210) directed toward said internal space (EIS) before the unlocking step (E1c), a step of storing (E2b) a second digital image (P2) using the sensor (210) directed toward said internal space (EIS) after access has been newly secured, an analysis step (E3) for analyzing the first and second images (P1, P2) to identify the objects deposited in the enclosure, removed from the enclosure or moved in the enclosure between the unlocking (E1c) and re-locking (E2a) steps, and, during a step (E100) for consulting the cycle history, providing at least one item of information (M1, M2) obtained during the analysis and relative to the difference between visible objects (O1, 02, 03) in the first and second images (P1, P2) on an interface (105) outside the enclosure (100).

2. The method for monitoring deposits, removals or movements according to claim 1, **characterized in that** an opening decision step (E1a) by a controller of an electronic board (106) integrated into the enclosure with secure access (100, 600, 700) and receiving digital information introduced by a user in order to unlock the enclosure, precedes and successively triggers, in this order, a step for capturing (E1b) the first image (P1) and the unlocking step (E1c).

3. The method for monitoring deposits, removals or movements according to claim 1, **characterized in that** a step for capturing (E1b) the first image is carried out before an opening decision step (E1a) by a controller of an electronic board (106) integrated into the enclosure with secure access (100, 600, 700) and receiving digital information introduced by a user in order to unlock the enclosure, by image captures at regular time intervals between two openings of the enclosure, the first image then being the last image captured before the opening decision step (E1a), and a date and a time (t1) being associated therewith according to the instant at which this first image was captured.

4. The method for monitoring deposits, removals or movements according to one of claims 1 to 3, **characterized in that** said information relative to the difference comprises highlighting (M1, M2), on the first or the second image, objects removed, moved or deposited (O1, 03), respectively, between the unlocking and re-locking steps.

5. The method for monitoring deposits, removals or movements according to one of claims 1 to 4, **characterized in that** it comprises an identification (E3) of objects on the first and second image (P1, P2) at least using a reference image of the empty enclosure (P0) taken during a commissioning or reset step (E0).

6. The method for monitoring deposits, removals or movements according to one of claims 1 to 5, **characterized in that** it comprises a display (E100), on a screen (105) of the interface, of said information relative to the difference.

7. The method for monitoring deposits, removals or movements according to one of claims 1 to 6, **characterized in that** it is implemented for an enclosure (100) which is that of a secure furniture item, such as a safe (100) or a security cabinet, optionally fireproof.

8. The method for monitoring deposits, removals or movements according to one of claims 1 to 6, **characterized in that** it is implemented for an enclosure which is that of a bank compartment (600) or a vault (700).

9. The method for monitoring deposits, removals or movements according to one of claims 1 to 8, **characterized in that** the capture of the first image and of the second image is taken by the sensor (210), which is fixed, with the same viewing angle and configuration.

10. A furniture system (100) for data processing comprising a piece of furniture comprising an enclosure with secure access and means for unlocking access to an internal space (EIS) of the enclosure to allow an introduction of an object into said space, a removal of an object from said space or the movement of such an object in said space, as well as means for re-locking access of said space, **characterized in that** the system comprises storage means (106) for storing a first digital image using a sensor (210) comprised in the piece of furniture and directed toward said internal space before implementation of the unlocking means, and storage means (106) for storing a second digital image using the sensor (210) after access has been newly secured, and means (105, 106) for determining and providing, on an interface (105) outside the enclosure, during consultation of the opening/closing cycle history, at least one item of information (M1, M2) obtained during an analysis and relative to the difference between the visible objects in the first and second images in order to monitor deposits, removals or movements of objects.

11. The furniture system according to claim 10, **characterized in that** the determining and providing means (105, 106) comprise a storage unit (106) for successive accesses to the secure space comprised in the piece of furniture, and an integrated screen (105) on a wall or door of the piece of furniture on which it is possible to review the items of information (M1, M2) relative to the difference associated with the successive accesses and the corresponding access date and time.

12. The furniture system according to claim 10 or claim 11, **characterized in that** the piece of furniture is a safe or a security cabinet, optionally fireproof.
